# EUROPEAN PATENT APPLICATION

(11) **EP 4 608 016 A1**
(43) Date of publication of application: **27.08.2025**
(21) Application number: 25157430.7
(22) Date of filing: 12.02.2025
(51) Int. Cl.: H04W 48/18, H04L 67/51

(54) **5G REMOTE PLMN CAPABILITY SHARING AND SERVICE DISCOVERY DELEGATION**

(30) Priority: 16.02.2024 US 202463554649 P; 10.04.2024 US 202418631463
(71) Applicant: Oracle International Corporation, Redwood Shores, CA 94065 (US)
(72) Inventor: SINGH, Virendra, Redwood Shores, 94065 (US); BANIEL, Uri, Redwood Shores, 94065 (US); MAHALANK, Shashikiran, Redwood Shores, 94065 (US); RAJ, John Mohan, Redwood Shores, 94065 (US)
(74) Representative: D Young & Co LLP

(57) **Abstract**

Various embodiments of the present technology generally relate to systems and methods for remote mobile network capability sharing, and delegation of service discovery and selection to the remote mobile network, such as from a visited or roaming network to a home network. A first public land mobile network (PLMN) system may send, via a local network repository function (NRF), a request for capability details of a second PLMN, the capability details including an ability of the second PLMN to handle delegated service discovery and selection. The first PLMN may receive the capability details, and send, from the first PLMN to the second PLMN, a delegated discovery and network function (NF) selection request directing a service communications proxy (SCP) of the second PLMN to determine a producer NF of the second PLMN to process a service request from a consumer NF of the first PLMN.

## Description

### CROSS-REFERENCE TO RELATED APPLICATION

The present application claims priority to pending U.S. provisional patent application, Application No. 63/554,649, filed February 16, 2024, entitled "SCP Deployment Topology and Capability Discovery in Different PLMN 5G Core Networks for Roaming Request Routing", the contents of which are hereby incorporated by reference in their entirety.

### TECHNICAL FIELD

Various embodiments of the present technology generally relate to management of roaming service between different mobile networks, such as fifth generation (5G) communications networks. More specifically, embodiments of the present technology relate to systems and methods for improved NF selection and routing between visitor or visited networks and home networks.

### BACKGROUND

Communications networks can be used to connect remote systems and devices, allowing for distributed and efficient processing, resource use, and intercommunication. User equipment (UE) can connect to a communications network through a network service provider or network operator. A UE or its associated user may subscribe to a particular network operator, which may provide communication service, network infrastructure, or both, within a designated region or area, which may be referred to as a home network. If the subscriber leaves the area of the home network, their UE may still be able to connect to a visited or visitor network as a roaming user. The visited network may communicate with the roaming subscriber's home network to manage service, billing, or other aspects of the roaming UE's network service. A network domain may be referred to as a public land mobile network (PLMN), which may include a combination of wireless communication services offered by a specific operator in a specific country or region (often referred to as a cellular network). A visitor network may be referred to as a visitor PLMN (VPLMN or V-PLMN) and a home network may be referred to as a home PLMN (HPLMN or H-PLMN).

Network nodes within a 5GC (5G core) network may take the form of network functions (NFs), service communications proxies (SCPs), security edge protection proxies (SEPPs), or other nodes, generally referred to as NFs. Producer NFs (PNF, NF-P, or NFp) may provide a service for consumer NFs (CNF, NF-C, or NFc). Under 3GPP (3rd Generation Partnership Project) standards, a consumer NF may select a producer NF to which to route a service request, or under certain deployment models, the NF-P selection process may be delegated to an SCP. When a visitor network is communicating with a home network (e.g., during a roaming session), service requests may be sent from a visitor NF-C or SCP to a home network NF-P.

However, SCP and consumer NFs in one network may not be aware of another network's supported deployment Model (B, C, or D, etc.) to support 5G SBI (service-based interface) communications. If a visitor NF attempts to take advantage of SBI communication features on the home network that the home network deployment model does not support (or vice versa), it may result in a mismatch and the service request may fail. Therefore, service discovery and routing may be handled internally at the visitor network. In case of any roaming request routing attempt failure, alternate NF selection and rerouting may be performed in the visitor network only, instead of at the home network, which may introduce delay in service request routing success, and successful responses may be delayed to the consumer NFs.

Meanwhile, a home network may prefer to perform discovery and selection of NFp in the home domain for various reasons. For example, the home domain may wish to avoid disclosing information about candidate NFp that may be sensitive (e.g. load and capacity info, topology info, etc.). The home domain may wish to apply consistent discovery and selection policies for requests issued from other domains, just as for those issued within the same domain (e.g., to achieve harmonized policies for intra- and inter-PLMN requests). Further, the home domain may wish to deploy its own discovery or selection policies, independently from NF implementations in other domains, including the possibility to use operator-specific attributes of the home network.

The information provided in this section is presented as background information and serves only to assist in any understanding of the present disclosure. No determination has been made and no assertion is made as to whether any of the above might be applicable as prior art with regard to the present disclosure.

### SUMMARY

Particular aspects are set out in the appended independent claims. Various optional embodiments are set out in the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Approaches described herein may be directed toward providing enhanced processes for service discovery and routing across network domains, while allowing the HPLMN to hide deployment information while performing unified discovery, selection, and routing to its own NF producers.

Various embodiments herein relate to systems, methods, and computer-readable storage media for performing configuration data management. In an embodiment, a public land mobile network (PLMN) system may comprise one or more processors, and a memory having stored thereon instructions that, upon execution by the one or more processors, cause the one or more processors to delegate discovery and routing from a first PLMN to a second PLMN. The one or more processors may send, via a first PLMN, a request for capability details of a second PLMN, the capability details including an ability of the second PLMN to handle delegated service discovery and selection, and receive, at the first PLMN, the capability details. The one or more processors may send, from the first PLMN to the second PLMN based on the capability details, a delegated discovery and network function (NF) selection request directing a remote service communications proxy (SCP) of the second PLMN to determine a producer NF of the second PLMN to process a service request from a consumer NF of the first PLMN, and receive a service request response at the first PLMN from the second PLMN in response to the delegated discovery and NF selection request.

In some examples, the PLMN system may send the request for capability details via a local network repository function (NRF) of the first PLMN to a remote NRF of the second PLMN, and receive the capability details at the local NRF from the remote NRF. The PLMN system may send the request for capability details via a GET request for a custom parameter, and send a subscription request, from the local NRF to the remote NRF, to receive an update when the capability details of the second PLMN change. In some examples, the PLMN system may provide the capability details from the local NRF to a local SCP of the first PLMN in response to a remote PLMN capability request from the local SCP. Further, the PLMN system may receive the service request at the local SCP from the consumer NF, and send the delegated discovery and NF selection request from the local SCP to the remote SCP in response to the service request. In some examples, the PLMN system may send a first NF discovery request from the local NRF to the remote NRF to determine the remote SCP, and send the delegated discovery and NF selection request to the remote SCP based on a response to the first NF discovery request received from the remote NRF. The PLMN system may the delegated discovery and NF selection request directs the remote SCP to determine the producer NF of the second PLMN to process a service request, including issue a second NF discovery request to the remote NRF to determine a plurality of producer NFs of the second PLMN configured to process the service request, perform a selection of the producer NF from the plurality of producer NFs, perform a first routing attempt of the service request to the producer NF, and when the first routing attempt fails, perform an alternate routing attempt to an alternate producer NF from the plurality of producer NFs, receive the service request response from a successful one of the first routing attempt and the alternate routing attempt, and forward the service request response to the local SCP. In some examples, the first PLMN has a model D deployment, the model D deployment indicating a mobile network including an SCP configured to perform delegated discovery and routing, and the second PLMN has a model D deployment. In some embodiments, the first PLMN has a model C deployment indicating a mobile network not configured to perform delegated discovery and routing, and the second PLMN has a model D deployment indicating a mobile network including an SCP configured to perform delegated discovery and routing. The PLMN system may perform an initial service request routing operation, including receive a first NF discovery request from the consumer NF at the local NRF for information on the producer NF to process the service request, perform NF discovery between the local NRF to the remote NRF for a plurality of producer NFs configured to process the service request, provide a discovery response to the consumer NF including details on the plurality of producer NFs, and receive an NF routing request from the consumer NF at the local SCP, the NF routing request including a discovery header identifying the producer NF as a target NF of the NF routing request. The PLMN system may forward the NF routing request from the local SCP to the remote SCP, directing the remote SCP to make a first routing attempt to the producer NF, and when the first routing attempt fails, perform an NF discovery to the remote NRF based on the discovery header, perform an alternate routing attempt to an alternate producer NF from the plurality of producer NFs based on the NF discovery, and return a success response to the first PLMN, the success response including a location identifier of the alternate producer NF. The PLMN system may then store, at the consumer NF, the location identifier. Further, the PLMN system may perform a subsequent service request routing operation, including receive a subsequent NF routing request from the consumer NF at the local SCP, the subsequent NF routing request including a routing binding header identifying the alternate producer NF as the target NF of the subsequent NF routing request based on the location identifier, and forward the subsequent NF routing request from the local SCP to the remote SCP, directing the remote SCP to make a first subsequent routing attempt to the alternate producer NF, when the first subsequent routing attempt fails, perform a second NF discovery to the remote NRF based on the routing binding header, perform a subsequent alternate routing attempt to the producer NF based on the NF discovery, and return a subsequent success response to the first PLMN, the subsequent success response including a location identifier of the producer NF.

In an alternative embodiment, a method may comprise operating a first public land mobile network (PLMN) to perform delegated discovery and routing to a second PLMN, comprising sending, via the first PLMN, a request for capability details of the second PLMN, the capability details including an ability of the second PLMN to handle delegated service discovery and selection. The method may comprise receiving, at the first PLMN, the capability details, sending, from the first PLMN to the second PLMN based on the capability details, a delegated discovery and network function (NF) selection request directing a remote service communications proxy (SCP) of the second PLMN to determine a producer NF of the second PLMN to process a service request from a consumer NF of the first PLMN, and receiving a service request response at the first PLMN from the second PLMN in response to the delegated discovery and NF selection request.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein.
FIG. 1 is a diagram of an operational environment of a system configured to perform 5G remote PLMN capability sharing and service discovery delegation, in accordance with certain embodiments of the present disclosure;
FIG. 2 is a flow diagram of an example system performing traffic flow for model D delegated request routing in a roaming scenario, in accordance with certain embodiments of the present disclosure;
FIG. 3 is a flow diagram of an example system performing traffic flow for model C request routing in a roaming scenario, in accordance with certain embodiments of the present disclosure;
FIG. 4 is a flow diagram of an example system configured to perform 5G remote PLMN capability sharing and service discovery delegation, in accordance with certain embodiments of the present disclosure;
FIG. 5 is a flow diagram of an example system configured to perform 5G remote PLMN capability sharing and service discovery delegation, in accordance with certain embodiments of the present disclosure;
FIG. 6 is a flow diagram of an example system configured to perform 5G remote PLMN capability sharing and service discovery delegation, in accordance with certain embodiments of the present disclosure;
FIG. 7 is a flow diagram of an example system configured to perform 5G remote PLMN capability sharing and service discovery delegation, in accordance with certain embodiments of the present disclosure; and
FIG. 8 illustrates a computing system configured to perform 5G remote PLMN capability sharing and service discovery delegation, in accordance with some embodiments of the present technology.

Some components or operations may be separated into different blocks or combined into a single block for the purposes of discussion of some of the embodiments of the present technology. Moreover, while the technology is amenable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

In the following detailed description of certain embodiments, reference is made to the accompanying drawings which form a part hereof, and in which are shown by way of illustration of example embodiments. It is also to be understood that features of the embodiments and examples herein can be combined, exchanged, or removed, other embodiments may be utilized or created, and structural changes may be made without departing from the scope of the present disclosure.

In accordance with various embodiments, the methods and functions described herein may be implemented as one or more software programs running on a computer processor or controller. Dedicated hardware implementations including, but not limited to, application specific integrated circuits, programmable logic arrays, and other hardware devices can likewise be constructed to implement the methods and functions described herein. Methods and functions may be performed by modules or nodes, which may include one or more physical components of a computing device (e.g., logic, circuits, processors, etc.) configured to perform a particular task or job, or may include instructions that, when executed, can cause a processor to perform a particular task or job, or any combination thereof. Further, the methods described herein may be implemented as a computer readable storage medium or memory device including instructions that, when executed, cause a processor to perform the methods.

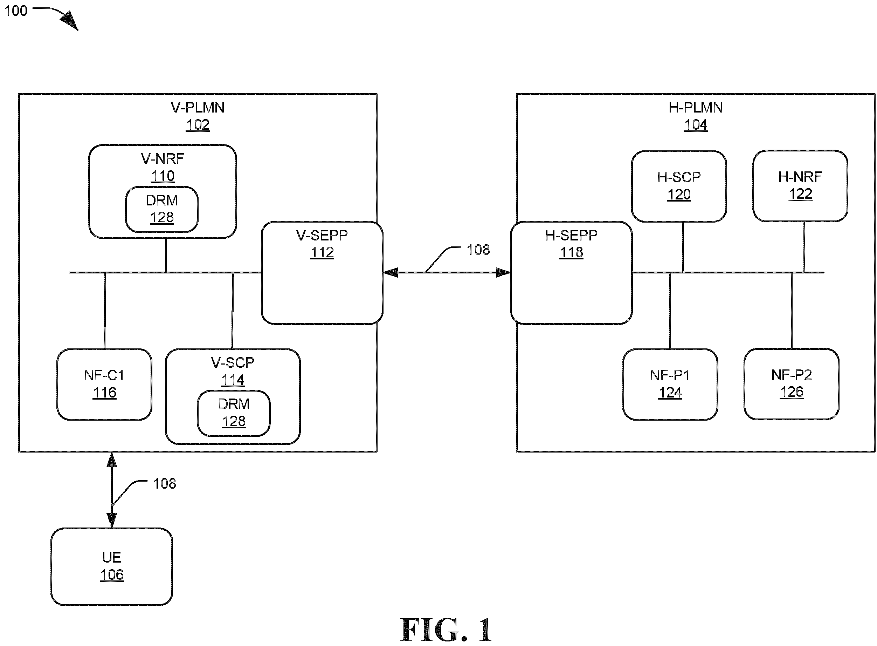

FIG. 1 is a diagram of a system 100 configured to perform 5G remote PLMN capability sharing and service discovery delegation, in accordance with certain embodiments of the present disclosure. The example system 100 may include 5G mobile networks implementing 3GPP (3rd Generation Partnership Project) communication standards (e.g., using the TS 33.510 technical specification), although the present disclosure may apply to other communication networks. The system 100 may include a UE 106 connected to a visited or visitor public land mobile network (V-PLMN) 102, which in turn may exchange data with a home PLMN (H-PLMN) 104. Components of system 100 may communicate via network connectivity components 108.

UE 106 may be a device, system, or module that may utilize the resources of the V-PLMN 102 and H-PLMN 104, such as to establish mobile communications with another UE or to connect to the internet. UE 106 may include mobile devices such as cell phones, tablets, or modems.

Network connectivity components 108 may comprise components that enable communication over communication links, such as network cards, ports, radio frequency (RF) modules, telecommunications channels, cell towers, processing circuitry and software, or other communication components. Network connectivity components 108 may include metallic, wireless, cellular, or optical links, using various communication formats and protocols. In some examples, network connectivity components 108 may simply be referred to as a "network" by which systems or modules are connected or communicate.

V-PLMN 102 and H-PLMN 104 may each include a combination of wireless communication services offered by a specific operator in a specific country or region (often referred to as a cellular network). Which PLMN is a "home" network or a "visitor" network (in which a UE 106 is roaming) may depend upon which network operator a UE 106 or user is subscribed to. Each of V-PLMN 102 and H-PLMN 104 may include a number of network functions (NFs) to provide a resource or functionality to various components and UEs 106 of the wireless network. The NFs may include a network repository function or NF repository function (NRF), such as home-NRF (H-NRF) 122 and visited-NRF (V-NRF) 110, a service communications proxy (SCP), such as home-SCP (H-SCP) 120 and visited-SCP (V-SCP) 114, and various NFs, such as a first consumer NF (NF-C1) 116, a first producer NF (NF-P1) 124, and a second producer NF (NF-P2) 126. In addition, each network may include a security edge protection proxy (SEPP), such as home-SEPP (H-SEPP) 118 and visited-SEPP (V-SEPP) 112. The components of V-PLMN 102 and H-PLMN 104, including the physical devices implementing them, may be co-located, remotely distributed, or any combination thereof.

Each or any of UE 106, H-NRF 122, V-NRF 110, H-SCO 120, V-SCP 114, NF-C1 116, NF-P1 124, NF-P2 126, H-SEPP 118, V-SEPP 112, and network 108 may be implemented via computers, servers, hardware and software modules, or other system components. The elements of system 100 may include components hosted or situated in the cloud, and implemented as software modules potentially distributed across one or more server devices or other physical components.

A network repository function or NF repository function (NRF) 110, 122 may be a monitoring element which includes and maintains a repository of information on the NF elements of the network, including what services or resources each provides, and potentially metadata provided by the NF. For example, NFs may register with the NRF to provide registration information and metadata regarding the NF to the NRF for storing in the repository. Once an NF is registered with the NRF, the NRF may provide information regarding the NF in response to discovery requests. For example, a consumer NF may send a discovery request to the NRF regarding an SCP 114, 120 within the network, and the NRF may issue a discovery response providing identifying information and metadata for SCPs in the repository matching the request.

A security edge protection proxy (SEPP) 112, 118 may be used to protect control plane traffic that is exchanged between different PLMNs 102, 104. A SEPP may perform message filtering, policing, and topology hiding for all API (application program interface) messages. Messages between SEPPs may be sent via an N32 interface (e.g., N32-C or N32-F), which may be an inter-PLMN interface standard. The transmissions may use a transport layer security (TLS) connection and may therefore be encrypted. A SEPP may use a different TLS connection to send messages to elements of its own network. Communications between components of V-PLMN 102 and components of H-PLMN 104 may be transmitted by way of V-SEPP 112 and H-SEPP 118.

SCP 114 and 120 may act as routing agents within a network (e.g., V-PLMN 102 or H-PLMN 104) of system 100. An SCP 114, 120 may subscribe with the local NRF 110, 122 and obtain reachability and service profile information regarding producer NF service instances within a PLMN. Consumer NFs 116 may connect to the SCP 114, and the SCP may load balance traffic among producer NF service instances that provide the required service, or may directly route the traffic to a specified producer NF.

A network node or NF that provides service may be referred to as a producer NF (e.g., NF-P1 124, NF-P2 126), while a network node or NF that consumes service may be referred to as a consumer NF (e.g., NF-C1 116). A network function can be both a producer NF and a consumer NF depending on whether it is consuming or providing service in a given exchange. So for example, NRF 110 may operate as a producer NF and SCP 114 may operate as a consumer NF in an exchange where NRF 110 is providing details on NF profiles to SCP 114. Generic consumer NFs 116 and producer NFs 124, 126 are depicted in system 100 in addition to specific example NFs (which may act as consumers or producers) such as NRFs 110, 122, SEPPs 112, 118, and SCPs 114, 120.

3GPP may provide a number of different implementation or deployment models for 5G networks, such as models A, B, C, and D. The models may define aspects of the network's infrastructure and capabilities of its components. Model A may include no NRF. Model B may include an NRF, but may not include SCPs for traffic routing and balancing. Model C may include an NRF and an SCP for routing, but may not include an SCP configured for delegated discovery and indirect communication. Model D may include an NRF and an SCP configured to perform delegated discovery-based routing. Delegated discovery and routing may refer to a situation in which a consumer NF specifies to the SCP what service the consumer is seeking and provides the SCP with the service request. The SCP may then determine NF-P options for servicing the request, may select the NF-P to send the request to, and then may select alternate NF-Ps or routing if the initial request(s) fails. In a model D delegated discovery scenario, a consumer NF may send a 5G SBI service request along with NF-P selection query parameters (e.g., in discovery headers) to the SCP. The SCP may then perform NF discovery with the NRF as per the received discovery headers from the consumer NF, and sends the 5G SBI service request to the selected producer NF. The producer NF is expected to process the received 5G SBI service request and send the response. Without delegated routing, a consumer NF may be required to select the NF-P itself, and then reselect alternates when an initial request fails, which may add delays to successful service requests and reduce the quality of service of a user session.

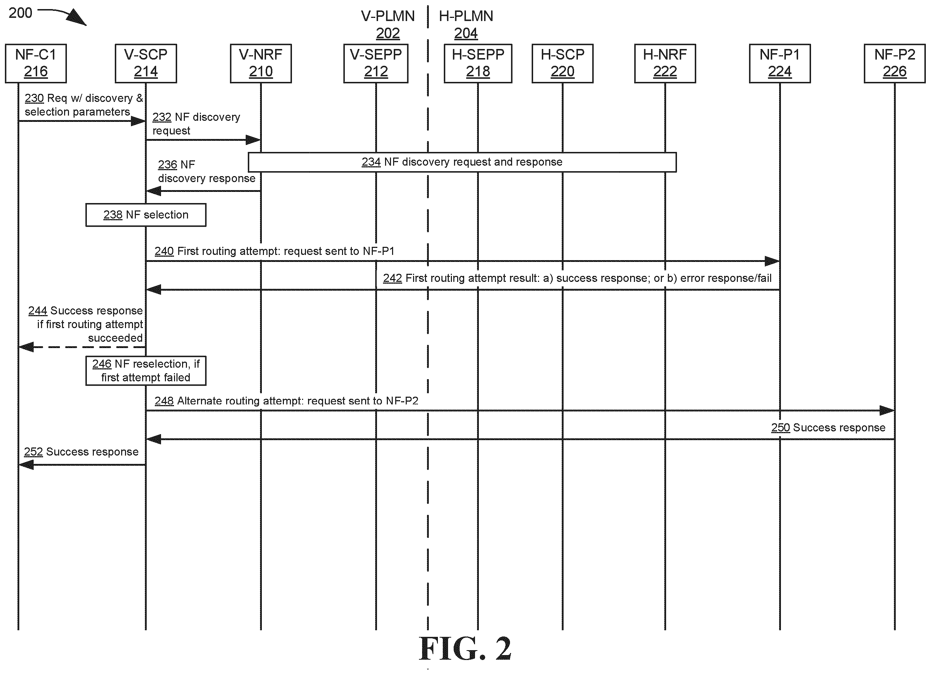

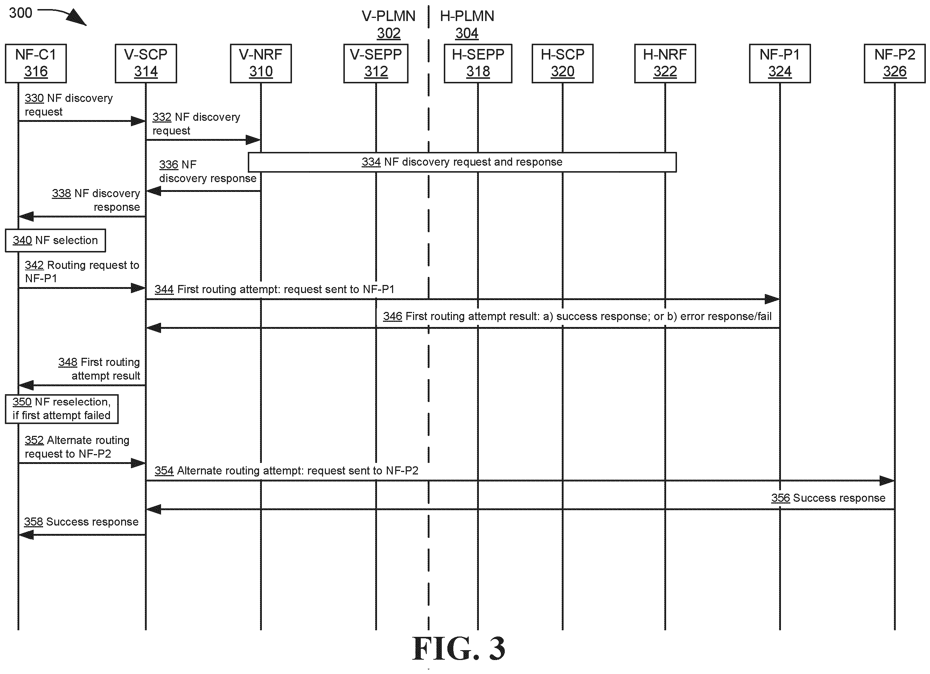

V-SCP 114 and NF-C1 116 from V-PLMN 102 may not be aware of what deployment model is supported by H-PLMN 104. If delegated discovery requests were sent to a PLMN that did not support them, the requests may fail and cause delays and failures in service sessions. FIGs. 2 and 3 provide example embodiments in which producer NF discovery, selection, and routing from V-PLMN 102 to access a producer NF within H-PLMN 104 may need to be performed within V-PLMN 102 by V-SCP 114 or NF-C1 116. Throughout this disclosure, examples are made of a consumer NF within V-PLMN 102 accessing a producer NF within H-PLMN 104, and potentially discovering capabilities and delegating selection and routing to H-PLMN 104, but it should be understood that the reverse is also applicable, with components of H-PLMN 104 discovering and delegating to V-PLMN 102.

FIG. 2 is a flow diagram of an example system 200 performing traffic flow for model D delegated request routing in a roaming scenario, in accordance with certain embodiments of the present disclosure. In particular, system 200 may include a V-PLMN 202 having an NF-C1 216, V-SCP 214, V-NRF 210, and V-SEPP 212, as well as an H-PLMN 204 including an H-SEPP 218, H-SCP 220, H-NRF 222, NF-P1 224, and NF-P2 226. The components of V-PLMN 202 and H-PLMN 204 may substantially correspond to components of V-PLMN 102 and H-PLMN 104 of FIG. 1.

In the example of FIG. 2, V-PLMN 202 may be a model D network, meaning NF discovery and routing may be delegated to V-SCP 214. NF-C1 216 may issue a service request with NF discovery and selection parameters in order to delegate discovery to V-SCP 214, at 230. Based on the request, V-SCP 214 may request producer NF discovery to V-NRF 210, at 232. V-NRF 210 may need to perform, at 234, discovery to H-NRF 222 (via V-SEPP 212 and H-SEPP 218, with potential routing through H-SCP 220) to discover details about producer NFs (NF-P1 224 and NF-P2 226) within H-PLMN 204. Performing NF discovery from V-PLMN 202 to H-PLMN 204 may include the H-PLMN 204 being required to disclose details about the topology or capabilities of NFs within its own network, which an operator of H-PLMN 204 may prefer not to share. The discovery details may be relayed from V-NRF 222 to V-SCP 214, at 236. At 238, V-SCP 214 may initially select to send the NF service request to NF-P1 224 based on the discovery and selection parameters received from NF-C1 216 at 230. V-SCP 214 may send an initial routing attempt to access NF-P 1 224 within H-PLMN 204, at 240. V-SCP 214 may receive a response at 242, indicating either that the first routing attempt was successful, or that the routing failed or encountered an error. If the first routing attempt succeeded, a successful routing response may be sent from V-SCP 214 to NF-C1 216, at 244. However, if the first routing request fails, then V-SCP 214 may need to perform reselection to NF-P2 226, at 246, and resend the request, at 248. The V-SCP 214 may receive a success response at 250, and forward the success response to NF-C1 216, at 252. A successful response may include service data or other information requested from an NF producer by NF-C1 216. All the transmissions between V-PLMN 202 and H-PLMN 204 may need to be routed between SEPPs 212 and 218 and may generally introduce undesirable delays for service requests. FIG. 3 provides another example of producer NF discovery and routing performed within a visited network.

FIG. 3 is a flow diagram of an example system 300 performing traffic flow for model C request routing in a roaming scenario, in accordance with certain embodiments of the present disclosure. In particular, system 300 may include a V-PLMN 302 having an NF-C1 316, V-SCP 314, V-NRF 310, and V-SEPP 312, as well as an H-PLMN 304 including an H-SEPP 318, H-SCP 320, H-NRF 322, NF-P1 324, and NF-P2 326. The components of V-PLMN 302 and H-PLMN 304 may substantially correspond to components of V-PLMN 102 and H-PLMN 104 of FIG. 1.

The example system 300 may be similar to the example system 200 of FIG. 2, except V-PLMN 202 may be a model C configuration where NF-C1 316 does not delegate discovery to V-SCP 314. Accordingly, NF-C1 316 may need to perform producer selection and re-selection, potentially introducing even further delays. NF-C1 316 may issue an NF discovery request to V-SCP 314, at 330. At 332, V-SCP 314 may send the NF discovery request to V-NRF 310. V-NRF 210 may need to perform, at 334, discovery to H-NRF 322 (via V-SEPP 312 and H-SEPP 318, with potential routing through H-SCP 320) to discover details about producer NFs (NF-P1 324 and NF-P2 326) within H-PLMN 304. The discovery details may be relayed from V-NRF 322 to V-SCP 314, at 336, which V-SCP 314 may forward to NF-C1 316, at 338. Based on the discovery response, NF-C1 316 may initially select to send the NF service request to NF-P1 324. NF-C1 316 may send the service routing request for NF-P1 324 to V-SCP 314, at 342, which may perform the initial routing attempt to access NF-P1 324 within H-PLMN 304, at 344. V-SCP 314 may receive a response at 346, indicating either that the first routing attempt was successful, or that the routing failed or encountered an error. V-SCP 314 may forward the first routing attempt results to NF-C1 316, at 348. If the first routing attempt succeeded, the service request may be completed. However, if the first routing request fails, then NF-C1 316 may need to perform reselection to NF-P2 326, at 350, and send an alternate routing request to V-SCP 314, at 252. The V-SCP 314 perform the alternate routing attempt, at 354, may receive a success response at 356, and forward the success response to NF-C1 316, at 358. As with system 200, all the transmissions in system 300 between V-PLMN 302 and H-PLMN 304 may need to be routed between SEPPs 312 and 318 and may generally introduce undesirable delays for service requests.

In addition to the potential producer selection and routing delays described above for either scenario of FIGs. 2 or 3, service discovery and requests may be handled according to the processes of V-PLMN 202 or 302, and may not be handled in the same manner as requests and communications within H-PLMN 204 or 304. H-PLMN 204 or 304 may prefer that all requests and messaging be handled in a consistent manner, and therefore discovery and routing would preferably be performed within H-PLMN 204 or 304, even for requests originating from V-PLMN 202 or 304.

Returning to FIG. 1, as shown in regards to FIGs. 2 and 3, mobile network implementations in which V-SCP 114 is not aware of the deployment model of H-PLMN 104 to support 5G SBI communications means that NF selection and routing must be performed in the V-PLMN 102. In the case of any roaming request routing attempt failure, rerouting attempts may also be performed in the V-PLMN 102, which may introduce delays in service request routing success and successful service responses to NF-C1 116.

Accordingly, an implementation in which model D delegated discovery is performed between V-PLMN 102 and H-PLMN 104 may be preferred. To avoid the delay in roaming service request routing due to alternate NF selection and rerouting being done in a visited V-PLMN 102, it is proposed to have the service discovery, NF selection, reselection, routing, rerouting, or multiple of the above be performed in home network H-PLMN 104. A V-SCP 114 may forward the Model D delegated discovery request along with NF selection parameters to the home network H-PLMN 104, where H-SCP 120 may be deployed to support Model D 5G SBI indirect communication.

In scenarios where NFc and NFp pertain to different domains, such as different PLMNs, NPNs (non-public networks), or different regional organizations in a same PLMN, delegated discovery to a home network may provide multiple advantages. For a visited network, delegated discovery may result in faster service response times. The operator (or organization) of the target or home domain may prefer to perform the discovery and selection of the NFp in the target domain through the use of indirect communication with delegated discovery for a number of reasons. For example, delegated discovery may allow the home network to avoid disclosing information about candidate NFp that may be sensitive (e.g. load and capacity info, topology info, etc.). Delegated discovery may enable the target domain to apply consistent discovery and selection policies for requests issued from other domains, to conform with those issued within the same domain (e.g. harmonized policies for intra and inter-PLMN requests. Additionally, delegated discovery may enable the operator of the target domain to deploy its own discovery or selection policies, independently from NF implementations in other domains, including the possibility to use operator-specific attributes.

Accordingly, it may be advantageous to enable a V-PLMN 102 to determine network deployment info (e.g., Model B, C or D support) of a H-PLMN 104, so that a V-SCP 114 or consumer NF 116 can delegate service discovery and NF selection to the H-PLMN 104 when such delegation is supported. In order to implement such a system, V-NRF 110, V-SCP 114, other components, or any combination thereof, may include a delegation and routing module (DRM 128) configured to determine the capabilities of remote networks (e.g., H-PLMN 104), and to implement the delegated discovery and routing as discussed herein.

At the bootup time of a network, or when networks are connected, V-NRF 110 (e.g., via DRM 128) and H-NRF 122 can negotiate and discover communication models used by NFs and SCPs in their respective networks (or optionally, a one-way discovery may be performed). The negotiation may include learning about `Model D delegated discovery' capability supported by both networks. In some embodiments, discovery of another network's capabilities can also be done upon a first discovery request for producer NFs (H-NFp 124 or 126) or of H-SCP 120 by visitor consumer NFs (NV-C1 116) or by V-SCP 114. The model and capability discovery results can then be cached by V-NRF 110 and H-NRF 122. V-SCP 114 can query or subscribe to V-NRF 110 in order to learn about the model or capabilities of H-PLMN 104.

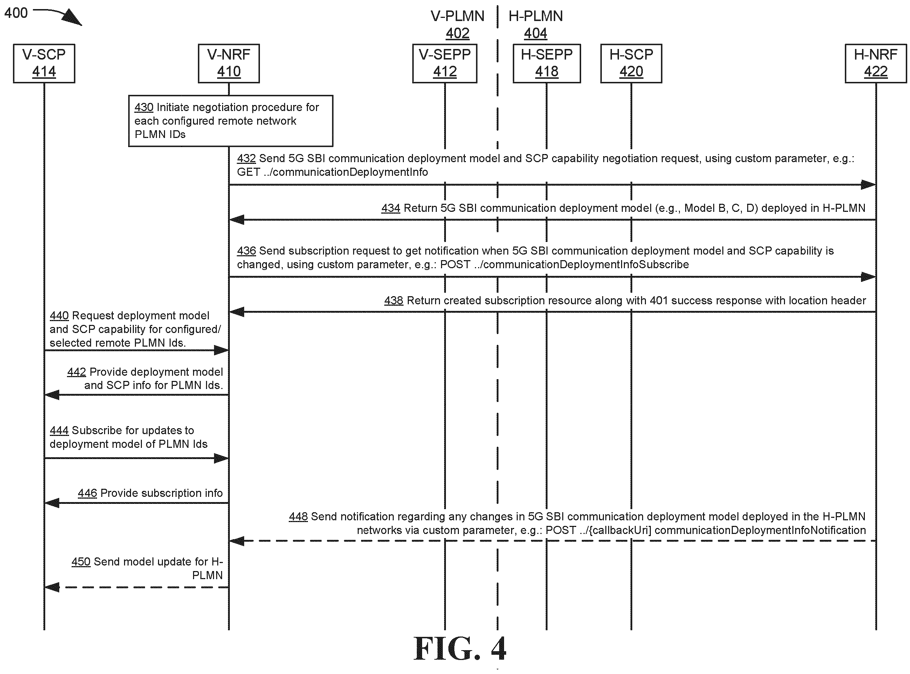

If V-SCP 114 supports `Model D delegated discovery' (e.g., if V-PLMN 102 is a model D deployment network), upon receiving a service request from NV-C1 116 that is destined to an H-NFp, V-SCP 114 may attempt to discover, via V-NRF 110 (and H-NRF 122), an H-SCP 120 that can also support `Model D delegated discovery'. In accordance with the above operations, if V-SCP 114 learns that H-SCP 120 supports `Model D delegated discovery', and based on an SLA (service-level agreement) between operators of V-PLMN 102 and H-PLMN 104, V-SCP 114 may forward discovery requests of H-NFp to H-SCP 120. Consequently, H-SCP 120 may perform delegated discovery & selection of H-NFp based on the service request delegated from V-PLMN 102. An example process of negotiating and discovery capabilities between networks is described in regard to FIG. 4.

FIG. 4 is a flow diagram of an example system 400 configured to perform 5G remote PLMN capability sharing and service discovery delegation, in accordance with certain embodiments of the present disclosure. In particular, system 400 may depict an example process by which a roaming or visited network determines the deployment model or capabilities of a home network, to determine whether delegated service discovery can be performed with the home network. System 400 may include a V-PLMN 402 having a V-SCP 414, V-NRF 410, and V-SEPP 412, as well as an H-PLMN 404 including an H-SEPP 418, H-SCP 420, and an H-NRF 422. The components of V-PLMN 402 and H-PLMN 404 may substantially correspond to components of V-PLMN 102 and H-PLMN 104 of FIG. 1.

When V-PLMN 402 is configured to operate with H-PLMN 404, or when a first service request is to be communicated from V-PLMN 402 to H-PLMN 404, a capability discovery or negotiation operation may occur. At 430, V-NRF 410 may initiate a negotiation procedure to determine capabilities of one or more remote networks. For example, V-PLMN 402 or V-NRF 410 may be configured, such as by an operator of V-PLMN 402, with a list of remote networks for which roaming communication is expected. The list may include PLMN Ids for each, addressing or access details, or other information. At startup, V-NRF 410 may perform the operation of system 400 with each remote network on its list, or on specific designated remote networks.

At 432, V-NRF 410 may send a 5G SBI communication deployment model and SCP capability negotiation request to H-NRF 422 (e.g., by way of V-SEPP 412, H-SEPP 418, and potentially H-SCP 420). In some examples, the request may include target PLMN Id(s) and requester PLMN Id(s), requesterNF=NRF (e.g., for V-NRF 410), and other details. The request may be sent via a custom parameter, e.g., "GET ../communicationDeploymentInfo", which the target network (H-PLMN 404) may be configured to recognize and respond to. If the target network is not configured to respond to the request, a fail or error response may be returned. In this case, V-PLMN 402 may treat H-PLMN 404 as a network that does not support delegated discovery and routing, and may operate as described in regard to FIGs. 2 or 3.

If the H-NRF 422 is configured to recognize the capability negotiation request, it may return the 5G SBI communication deployment model (e.g., Model B, C, D) deployed in H-PLMN 404, at 434. H-NRF 422 may return the 5G SBI communication deployment model and SCP capability negotiation response based operator configuration at H-NRF 422, or based on registered SCP profiles (e.g., of H-SCP 420) and their capabilities. For example, when an H-SCP 420 registers with H-NRF 422, it may provide its delegated routing and other capabilities. Based on the registered details, the H-NRF 422 can determine the deployment model and provide that in response to the capability negotiation request 432, or the H-NRF 422 can merely provide capabilities without directly specifying the deployment model. V-NRF 410 may update its own database based on the deployment model or capabilities information received from H-NRF 422, so that V-NRF 410 knows how to handle future NF service requests targeting H-PLMN 404.

At 436, V-NRF 410 may send a subscription request to H-NRF 422, in order to receive notifications when the 5G SBI communication deployment model and SCP capabilities of H-PLMN 404 are changed. The subscription request may also include target remote PLMN Id(s), request PLMN Id(s), requesterNF=NRF, and other details, and may also be sent via a custom parameter; e.g.: "POST ../communicationDeploymentInfoSubscribe". In response to the subscription request, H-NRF 422 may create a subscription resource, and may return the subscription resource along with a 401 success response with location header, at 438.

At 440, V-SCP 414 may request 5G SBI communication deployment model and SCP capability information for H-PLMN 404 from V-NRF 410, such as based on configured or selected PLMN Ids. In response, V-NRF 410 may provide the deployment model and SCP capability information for H-PLMN 404 to V-SCP 414, at 442, which may store the information locally for fast access in future operations. V-SCP 414 may also subscribe to V-NRF 410 to receive updates to changes to the deployment model or SCP capabilities of H-PLMN 404, at 444. At 446, V-NRF 410 may create a subscription resource and provide the subscription details to V-SCP 414.

At some point, an update to the 5G SBI communication deployment model and SCP capability of H-PLMN 404 may occur. H-PLMN 404 deployment changes may occur due to H-SCP 420 deployment changes, and its supported capabilities. In such cases, H-NRF 420 may send a notification to V-NRF 410 as per the subscription from 436. The capability update notification may be provided to V-NRF 410 via a custom parameter, e.g., "POST .../{callbackUri} communicationDeploymentInfoNotification". In response, V-NRF 410 may update the deployment model and SCP capability details stored at V-NRF 410, and may return an acknowledgement response to H-SCP 422. Additionally, if V-SCP 414 subscribed to V-NRF 410 for updates to the capabilities of H-PLMN 404, then V-NRF 410 may send a model and capabilities update to V-SCP 414, at 450. V-SCP 414 may update its local model and capabilities information for H-PLMN 404 based on the notification.

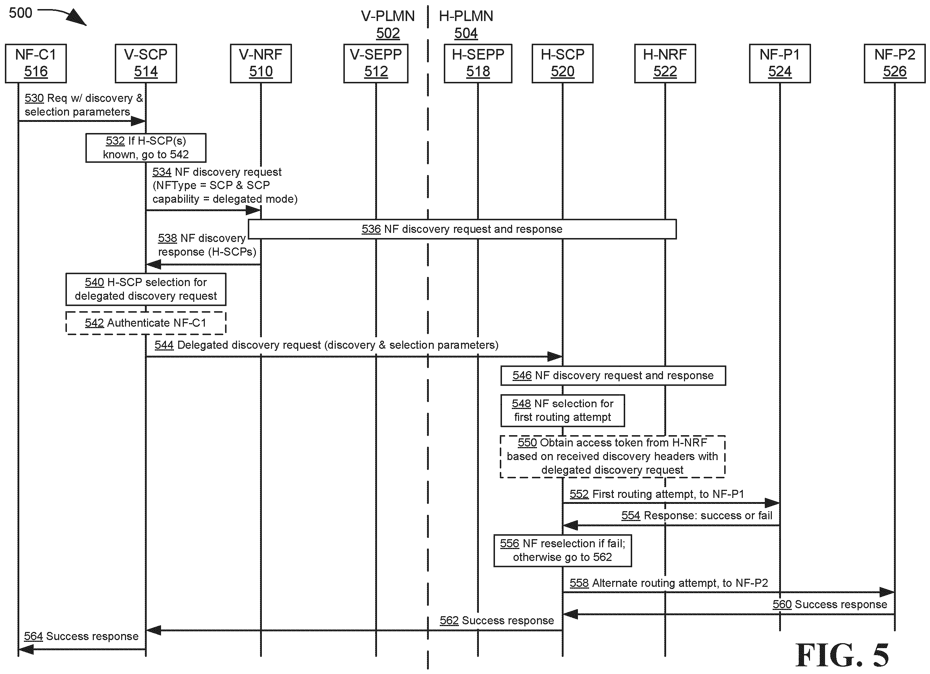

Once V-PLMN 402 has determined the deployment model or capabilities of H-PLMN 404, and ascertained that H-PLMN supports delegated discovery and (re)routing, then NF requests may be delegated from V-PLMN 402 to H-PLMN 404. An example process for delegated discovery and routing is described in regard to FIG. 5.

FIG. 5 is a flow diagram of an example system 500 configured to perform 5G remote PLMN capability sharing and service discovery delegation, in accordance with certain embodiments of the present disclosure. In particular, system 500 may depict an example process for delegation of NF discovery and service request routing, from a model D V-PLMN 502 (e.g., one which supports delegation) to a model D H-PLMN 504. System 500 may include a V-PLMN 502 having an NF-C1 516, V-SCP 514, V-NRF 510, and V-SEPP 512, as well as an H-PLMN 504 including an H-SEPP 518, H-SCP 520, H-NRF 522, NF-P1 524, and NF-P2 526. The components of V-PLMN 502 and H-PLMN 504 may substantially correspond to components of V-PLMN 102 and H-PLMN 104 of FIG. 1.

FIG. 5 depicts an example of utilizing a system where V-PLMN 502 has obtained details on the deployment model of H-PLMN 504 (e.g., according to the process of FIG. 4), and determined that H-PLMN 504 supports delegated discovery. NF-C1 516 may issue a discovery request and service selection parameters to V-SCP 514, at 530. The service selection parameters may indicate what type of service the consumer NF is seeking, so that an appropriate producer can be determined.

If V-SCP 514 already knows the routing details to an H-SCP 520 (e.g., one that supports delegation), V-SCP 514 may proceed to H-SCP selection, at 540. If V-SCP 514 does not already have information on H-SCP 520, V-SCP 514 may send a discovery request to V-NRF 510 for an NF Type = SCP that supports delegation in H-PLMN 504, at 534. At 536, the V-NRF 510 may query the H-NRF 522 (e.g., via V-SEPP 512 and H-SEPP 518) for such an SCP in H-PLMN 504, and forward the received details on H-SCP(s) 520 to V-SCP 514, at 538. Based on the determined H-SCPs 520 that support delegation, V-SCP 514 may perform H-SCP selection for performing delegated discovery of an NF producer for the discovery request 530, at 540.

At 542, V-SCP 514 may optionally perform OAuth 2.0 authentication and authorization of NF-C1 516, in roaming scenarios. When V-SCP 514 forwards delegated discovery requests to H-SCP 520, then NF-C1 516 authentication at V-NRF 510 may be missing. To address this, V-SCP 514 may be configured to perform authentication and authorization on NF-C1 516. (See, e.g. TS33.510, 13.4.1.2 and 13.4.1.2.1). V-SCP 520 may authenticate NF-C1 516 based on an mTLS (mutual transport layer security) or CCA (client credentials assertion) header received with delegated discovery request 530 NF-C1 516. Based on the header information, the V-SCP 514 may ensure that NF-C1 516 is registered with V-NRF 510. V-SCP 514 may access V-NRF 510 to verify the registration. Alternately, V-SCP 514 may learn the NF topology of V-PLMN 502 from V-NRF 510 over one or more prior exchanges; V-SCP 514 can validate that NF-C1 516 is registered with V-NRF 510 if NF-C1 516 is in V-SCP 514's learned topology, without contacting V-NRF 510 to verify the registration.

At 544, V-SCP 514 can provide the delegated discovery request, including the discovery and selection parameters for a producer NF, to an H-SCP 520 that supports delegation. Based on the delegated discovery request, H-SCP 520 may perform an NF discovery request and response exchange with H-NRF 522, at 546. The H-SCP 520 may obtain information about both NF-P1 524 and NF-P2 526 as potential producer NFs that may provide the requested service. At 548, H-SCP 520 may perform NF selection for a first routing attempt, and in the depicted example may select NF-P1 524 as the first producer NF to which to route the request.

At 550, after producer NF selection, H-SCP 520 may optionally obtain an access token from H-NRF 522 using the discovery headers received with the delegated discovery request 544, as part of an OAuth 2.0 authorization procedure.

At 552, H-SCP 520 may send the request to NF-P1 524 in a first routing attempt. H-SCP 520 may receive a response at 554, indicating either success or failure. If the first routing attempt succeeded, the process flow may resume from 562; otherwise, H-SCP 520 may perform NF reselection when the first routing attempt fails. NF reselection may include H-SCP 520 choosing another NF producer option from the list obtained at 546; in the present example, for NF-P2 526. At 558, H-SCP 520 may send the request to NF-P2 526 during a second or alternate routing attempt, and receive a success response at 560. H-SCP 520 may forward or provide a success response to V-SCP 514, at 562, and V-SCP 514 may forward or provide a success response to NF-C1 516 at 564, corresponding to the initial request from 530.

By locally handling service discovery and routing in H-PLMN 504, it may save time and be more efficient in obtaining successful service responses. Service discovery and message routing may also be handled internally by H-PLMN 504 and its components, thereby enabling H-PLMN 504 to maintain consistent or uniform operations and taking full advantage of any capabilities supported by the components of H-PLMN 504. Further, this implementation may limit how much topology and other sensitive details a H-PLMN 504 must share to V-PLMN 502, such as regarding delegation-capable SCPs 520. In some examples, H-PLMN 504 may be configured (e.g., via H-SEPP 518) to have an H-SEPP 518 that can perform delegated routing, or that has one or more selected H-SCPs 520 it uses for routing requests from V-PLMN 502. This may further limit the exposure of H-PLMN 504 details to other networks, because H-PLMN 504 may only need to provide details regarding H-SEPP 518.

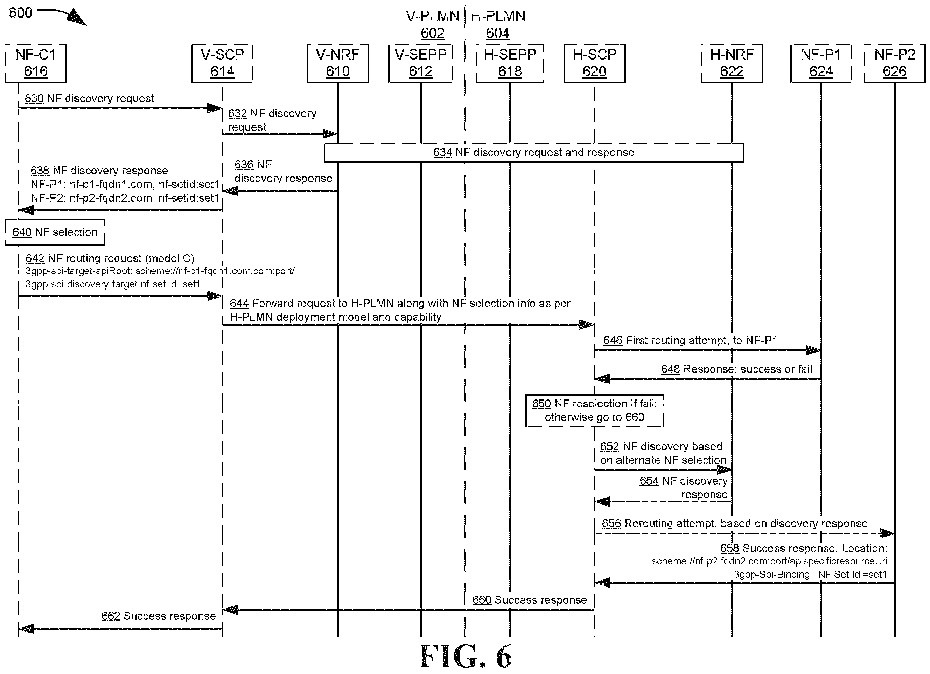

The process flow of FIG. 5 may correspond to a system 500 in which V-PLMN 602 has a model D deployment or is configured to delegate NF discovery and request routing. Another example implementation in which V-PLMN has a model C deployment (without discovery delegation as a pre-configured feature) is described in regard to FIGs. 6-7.

FIG. 6 is a flow diagram of an example system 600 configured to perform 5G remote PLMN capability sharing and service discovery delegation, in accordance with certain embodiments of the present disclosure. In particular, system 600 may depict an example process for an initial NF discovery request routing from a model C V-PLMN 602 (e.g., one which does not have default delegation support) to a model D H-PLMN 604. System 600 may include a V-PLMN 602 having an NF-C1 616, V-SCP 614, V-NRF 610, and V-SEPP 612, as well as an H-PLMN 604 including an H-SEPP 618, H-SCP 620, H-NRF 622, NF-P1 624, and NF-P2 626. The components of V-PLMN 602 and H-PLMN 604 may substantially correspond to components of V-PLMN 102 and H-PLMN 104 of FIG. 1.

A V-SCP 614 from a model C deployment can still delegate NF re-selection and routing to an H-SCP 620 from a model D deployment. A model C deployment V-SCP 614 may forward a 5G SBI service request with routing binding header to H-SCP 620, whereupon H-SCP 620 can perform NF re-selection and rerouting to producer NFs based on the routing binding header. Note that for Model-C Visitor network 602 deployment, an initial resource creation service request (e.g., POST or PUT method) from NF-C1 616 may not have routing binding header. So if V-SCP 614 forwards the same request to H-SCP 620, then H-SCP 620 may not be able to perform NF re-selection and alternate routing, as H-SCP 620 may not have any NF reselection info (e.g., routing binding header or delegated discovery headers). Therefore, in order to perform NF re-selection and rerouting, H-SCP 620 should be provided with NF reselection information from a routing binding header or delegated discovery header.

After determining a deployment model and SCP capabilities of the remote home network (as described in regard to FIG. 4), NF-C1 616 may issue an initial NF discovery request for resource creation to V-SCP 614, at 630. V-SCP 614 may forward the discovery request to V-NRF 610, at 632, and V-NRF 610 may exchange an NF discovery request and response with H-NRF 622 (e.g., via V-SEPP 612, H-SEPP 618, and potentially H-SCP 620), at 634. V-NRF 610 may return the NF discovery response to V-SCP 614, which may in turn provide the response back to NF-C1 616. The NF discovery response may include address information and metadata for the potential H-NF producers, such as "NF-P1: nf-p1-fqdn1.com, nf-setid:set1; NF-P2: nf-p2-fqdn2.com, nf-setid:set1".

Based on the NF discovery response and the provided NF producer options, NF-C1 616 may perform initial NF selection, at 640, and may select NF-P1 624 in this example. NF-C1 616 may then issue a model C service request to V-SCP 614 that identifies the selected NF-P, and alternate NF-P selection information, at 642. For example, the model C service request 642 may include info "3gpp-sbi-target-apiRoot" in a header that provides the selected producer info (e.g. scheme://nf-p1-fqdn1.com.com:port/ to identify NF-P1 624). To enable alternate NF selection and rerouting in H-PLMN 604 in the event the request to the initially selected NF-P1 624 fails, NF-C1 616 may include alternate NF selection info in 3gpp-sbi-discovery-* header(s); e.g., in this case 3gpp-sbi-discovery-target-nf-set-id=set1, so that H-SCP 620 can use it for alternate NF selection and rerouting later, at 652. At 644, V-SCP 614 may forward the request to H-SCP 620 along with NF selection info from NF-C1 616, according to H-PLMN 604 deployment model and capability.

H-SCP 620 may, based on the received request, make a first routing attempt to NF-P1 624 as per the received "3gpp-sbi-target-apiRoot" header info, at 646, and receive a success or fail response, at 648. At 650, if the response was successful, the process flow may continue at 660. If the response indicated routing failure, H-SCP 620 may initiate an NF reselection operation at 650. At 652, NF reselection may include the H-SCP 620 issuing an NF discovery request to H-NRF 622 based on the alternate NF selection indicated in the discovery header or routing binding header info from the NF routing request received from NF-C1 616. For example, the NF routing request 642 metadata may indicate an NF set Id that may be used to determine an alternate NF producer from H-NRF 622. At 654, H-NRF 622 may provide an NF discovery response to H-SCP 620 that indicates viable NF producers to use as alternates.

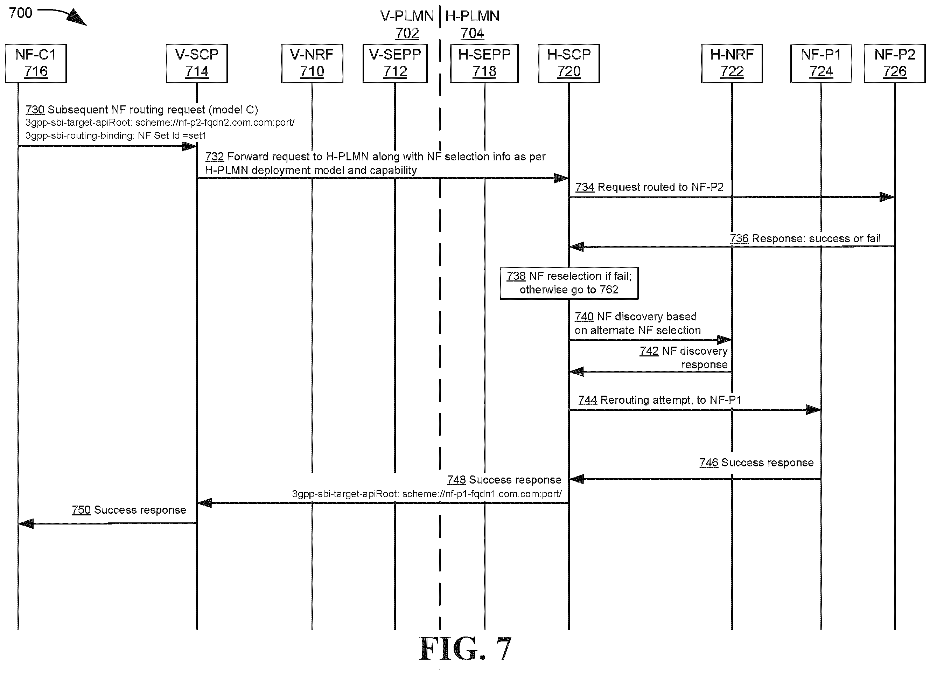

Based on the NF discovery response at 654, H-SCP 620 may perform a rerouting attempt to NF-P2 626, at 656. In response, NF-P2 626 may send a success response to H-SCP 620. The success response may include location data for the successful NF producer resource, such as, "Location: scheme://nf-p2-fqdn2.com:port/apispecificresourceUri; 3gpp-Sbi-Binding : NF Set Id =set1". The success response, as well as the location information, may be returned from H-SCP 620 to V-SCP 614, at 660, and from V-SCP 614 to NF-C1 616, at 662. The NF-C1 616 may store a record of which H-NFp has the created resource corresponding to the successful routing request; in this case NF-P2 626. Therefore, if the initial producer NF (e.g., NF-P1 624) selected by NF-C1 616 was not successful, NF-C1 616 would know that subsequent service requests for that same resource should go to the alternate selected producer (e.g., NF-P2 626). Subsequent routing requests may be handled in a different manner, as described in regard to FIG. 7.

FIG. 7 is a flow diagram of an example system 700 configured to perform 5G remote PLMN capability sharing and service discovery delegation, in accordance with certain embodiments of the present disclosure. In particular, system 700 may depict an example process for a subsequent routing request using 3gpp-sbi-target-apiroot header along with routing binding header information. The subsequent routing of system 700 may be issued from a model D V-PLMN 702, but in the current example it will be shown from a model C V-PLMN 702 to a model D H-PLMN 704, after initial resource creation as described in regard to system 600. System 700 may include a V-PLMN 702 having an NF-C1 716, V-SCP 714, V-NRF 710, and V-SEPP 712, as well as an H-PLMN 704 including an H-SEPP 718, H-SCP 720, H-NRF 722, NF-P1 724, and NF-P2 726. The components of V-PLMN 702 and H-PLMN 704 may substantially correspond to components of V-PLMN 102 and H-PLMN 104 of FIG. 1.

After resource creation from FIG. 6, NF-C1 716 may have binding information. Subsequent routing requests regarding the same resource from NF-C1 716 to V-SCP 714, at 730, may include a routing binding header along with producer NF selection info. For example, a subsequent request for the resource created at NF-P2 726 (as described in FIG. 7) may include, "3gpp-sbi-target-apiRoot: scheme://nf-p2-fqdn2.com.com:port/ ; 3gpp-sbi-routing-binding: NF Set Id =set1". V-SCP 714 may forward the request to H-SCP 720 (e.g., via V-SEPP 712 and H-SEPP 718) along with the NF selection information, as per the H-PLMN 704 deployment model and capability.

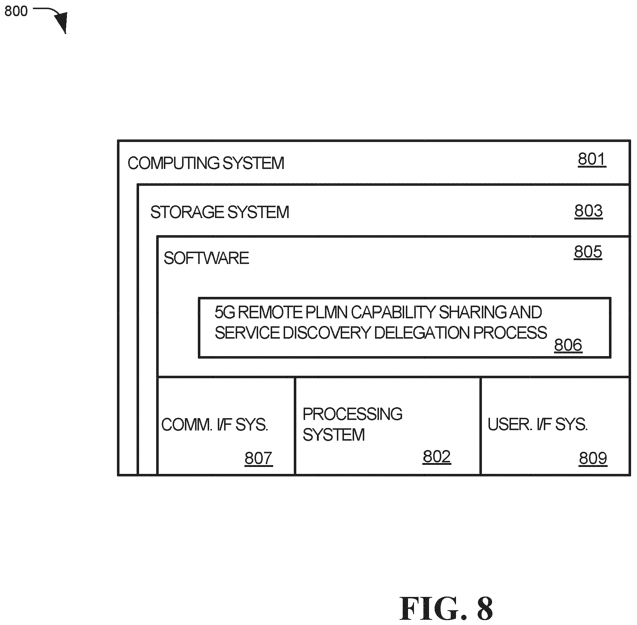

H-SCP 720 can perform routing or rerouting on the received 3gpp-sbi-target-apiRoot and routing binding headers; in this case, routing the request to NF-P2 726 at 734. H-SCP 720 may receive a response from NF-P2 726, at 736. If the response indicates a success, at 738, the process flow may continue from 748. If the response 736 indicates a failure, H-SCP 720 may perform NF reselection, at 738. H-SCP 720 may issue an NF discovery request to H-NRF 722, at 740, based on the information from the routing binding header, and receive an NF discovery response at 742. At 744, H-SCP 720 may perform an alternate NF selection routing attempt to NF-P1, based on the NF discovery response. H-SCP 720 may receive a success response, at 746. The success response 746 may not include location and binding header information, which may only be included at the time of resource creation (e.g., a "201 Created" response). However, since the actual serving producer was changed, NF-C1 716 may need to be informed. Accordingly, H-SCP 720 may be configured to add a 3gpp-Sbi-Target-apiRoot header in the response back to V-PLMN 702. The 3gpp-Sbi-Target-apiRoot header may contain the apiRoot of the selected or changed target URI in a response sent to an HTTP client, when an SCP selected or reselected a new HTTP server to route the request and no location HTTP header is included in the HTTP response (for more info see TS29.500 section 5.2.3.2.4 3gpp-Sbi-Target-apiRoot). H-SCP 720 may send the success response, including the 3gpp-Sbi-Target-apiRoot header identifying NF-P1 724 as the serving producer, to V-SCP 714, at 748, which may be forwarded from V-SCP 714 to NF-C1 716, at 750. NF-C1 716 may update its local information indicating which producer NF is servicing the resource request, from NF-P2 726 to NF-P1 724. A system configured for remote network capability sharing and discovery and routing delegation is discussed further in regard to FIG. 8.

FIG. 8 illustrates an apparatus 800 including a computing system 801 that is representative of any system or collection of systems in which the various processes, systems, programs, services, and scenarios disclosed herein may be implemented. For example, computing system 801 may be an example of UE 106, V-PLMN 102, H-PLMN 104, V-NRF 110, V-SCP 114, V-SEPP 112, NF-C1 116, DRM 128, H-SEPP 118, H-NRF 122, H-SCP 120, NF-P1 124, or NF-P2 of FIG. 1. Examples of computing system 801 include, but are not limited to, desktop computers, laptop computers, server computers, routers, web servers, cloud computing platforms, and data center equipment, as well as any other type of physical or virtual server machine, physical or virtual router, container, and any variation or combination thereof.

Computing system 801 may be implemented as a single apparatus, system, or device or may be implemented in a distributed manner as multiple apparatuses, systems, or devices. Computing system 801 may include, but is not limited to, processing system 802, storage system 803, software 805, communication interface system 807, and user interface system 809. Processing system 802 may be operatively coupled with storage system 803, communication interface system 807, and user interface system 809.

Processing system 802 may load and execute software 805 from storage system 803. Software 805 may include a 5G remote PLMN capability sharing and service discovery delegation process 806, which may be representative of any of the operations for determining a deployment model or capabilities of a remote network, and based on the capabilities, delegate service discovery and request routing to the remote network, as discussed with respect to the preceding figures. When executed by processing system 802, software 805 may direct processing system 802 to operate as described herein for at least the various processes, operational scenarios, and sequences discussed in the foregoing implementations. Computing system 801 may optionally include additional devices, features, or functionality not discussed for purposes of brevity.

In some embodiments, processing system 802 may comprise a micro-processor and other circuitry that retrieves and executes software 805 from storage system 803. Processing system 802 may be implemented within a single processing device but may also be distributed across multiple processing devices or sub-systems that cooperate in executing program instructions. Examples of processing system 802 may include general purpose central processing units, graphical processing units, application specific processors, and logic devices, as well as any other type of processing device, combinations, or variations thereof.

Storage system 803 may comprise any memory device or computer readable storage media readable by processing system 802 and capable of storing software 805. Storage system 803 may include volatile and nonvolatile, removable and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 803 may also include computer readable communication media over which at least some of software 805 may be communicated internally or externally. Storage system 803 may be implemented as a single storage device but may also be implemented across multiple storage devices or sub-systems co-located or distributed relative to each other. Storage system 803 may comprise additional elements, such as a controller, capable of communicating with processing system 802 or possibly other systems.

Software 805 (including 5G remote PLMN capability sharing and service discovery delegation process 806 among other functions) may be implemented in program instructions that may, when executed by processing system 802, direct processing system 802 to operate as described with respect to the various operational scenarios, sequences, and processes illustrated herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 805 may include additional processes, programs, or components, such as operating system software, virtualization software, or other application software. Software 805 may also comprise firmware or some other form of machine-readable processing instructions executable by processing system 802.

In general, software 805 may, when loaded into processing system 802 and executed, transform a suitable apparatus, system, or device (of which computing system 801 is representative) overall from a general-purpose computing system into a special-purpose computing system customized to implement the systems and processes as described herein. Indeed, encoding software 805 on storage system 803 may transform the physical structure of storage system 803. The specific transformation of the physical structure may depend on various factors in different implementations of this description. Examples of such factors may include, but are not limited to, the technology used to implement the storage media of storage system 803 and whether the computer-storage media are categorized as primary or secondary storage, as well as other factors.

For example, if the computer readable storage media are implemented as semiconductor-based memory, software 805 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 807 may include communication connections and devices that allow for communication with other computing systems (not shown) over communication networks (not shown). Examples of connections and devices that together allow for inter-system communication may include network interface cards, antennas, power amplifiers, radio-frequency (RF) circuitry, transceivers, and other communication circuitry. The connections and devices may communicate over communication media to exchange communications with other computing systems or networks of systems, such as metal, glass, air, or any other suitable communication media.

Communication between computing system 801 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof.

Therfore, from one perspective, there have been described approaches for systems and methods for remote mobile network capability sharing, and delegation of service discovery and selection to the remote mobile network, such as from a visited or roaming network to a home network. A first public land mobile network (PLMN) system may send, via a local network repository function (NRF), a request for capability details of a second PLMN, the capability details including an ability of the second PLMN to handle delegated service discovery and selection. The first PLMN may receive the capability details, and send, from the first PLMN to the second PLMN, a delegated discovery and network function (NF) selection request directing a service communications proxy (SCP) of the second PLMN to determine a producer NF of the second PLMN to process a service request from a consumer NF of the first PLMN.

Further examples of feature combinations taught by the present disclosure are set out in the following numbered clauses.

Clause 1. A public land mobile network (PLMN) system, comprising: one or more processors; and a memory having stored thereon instructions that, upon execution by the one or more processors, cause the one or more processors to delegate discovery and routing from a first PLMN to a second PLMN, including: send, via a first PLMN, a request for capability details of a second PLMN, the capability details including an ability of the second PLMN to handle delegated service discovery and selection; receive, at the first PLMN, the capability details; send, from the first PLMN to the second PLMN based on the capability details, a delegated discovery and network function (NF) selection request directing a remote service communications proxy (SCP) of the second PLMN to determine a producer NF of the second PLMN to process a service request from a consumer NF of the first PLMN; and receive a service request response at the first PLMN from the second PLMN in response to the delegated discovery and NF selection request.

Clause 2. The PLMN system of clause 1, wherein the instructions, upon execution by the one or more processors, further cause the one or more processors to: send the request for capability details via a local network repository function (NRF) of the first PLMN to a remote NRF of the second PLMN; and receive the capability details at the local NRF from the remote NRF.

Clause 3. The PLMN system of clause 2, wherein the instructions, upon execution by the one or more processors, further cause the one or more processors to: send the request for capability details via a GET request for a custom parameter; and send a subscription request, from the local NRF to the remote NRF, to receive an update when the capability details of the second PLMN change.

Clause 4. The PLMN system of clause 2 or 3, wherein the instructions, upon execution by the one or more processors, further cause the one or more processors to: provide the capability details from the local NRF to a local SCP of the first PLMN in response to a remote PLMN capability request from the local SCP.

Clause 5. The PLMN system of clause 4, wherein the instructions, upon execution by the one or more processors, further cause the one or more processors to: receive the service request at the local SCP from the consumer NF; and send the delegated discovery and NF selection request from the local SCP to the remote SCP in response to the service request.

Clause 6. The PLMN system of clause 5, wherein the instructions, upon execution by the one or more processors, further cause the one or more processors to: send a first NF discovery request from the local NRF to the remote NRF to determine the remote SCP; and send the delegated discovery and NF selection request to the remote SCP based on a response to the first NF discovery request received from the remote NRF.

Clause 7. The PLMN system of clause 6, further comprising: the delegated discovery and NF selection request directs the remote SCP to determine the producer NF of the second PLMN to process a service request, including: issue a second NF discovery request to the remote NRF to determine a plurality of producer NFs of the second PLMN configured to process the service request; perform a selection of the producer NF from the plurality of producer NFs; perform a first routing attempt of the service request to the producer NF; when the first routing attempt fails, perform an alternate routing attempt to an alternate producer NF from the plurality of producer NFs; receive the service request response from a successful one of the first routing attempt and the alternate routing attempt; and forward the service request response to the local SCP.

Clause 8. The PLMN system of clause 7, further comprising: the first PLMN has a model D deployment, the model D deployment indicating a mobile network including an SCP configured to perform delegated discovery and routing; and the second PLMN has a model D deployment.

Clause 9. The PLMN system of clause 5, 6 or 7, further comprising: the first PLMN has a model C deployment indicating a mobile network not configured to perform delegated discovery and routing; the second PLMN has a model D deployment indicating a mobile network including an SCP configured to perform delegated discovery and routing; wherein the instructions, upon execution by the one or more processors, further cause the one or more processors to perform an initial service request routing operation, including: receive a first NF discovery request from the consumer NF at the local NRF for information on the producer NF to process the service request; perform NF discovery between the local NRF to the remote NRF for a plurality of producer NFs configured to process the service request; provide a discovery response to the consumer NF including details on the plurality of producer NFs; receive an NF routing request from the consumer NF at the local SCP, the NF routing request including a discovery header identifying the producer NF as a target NF of the NF routing request; forward the NF routing request from the local SCP to the remote SCP, directing the remote SCP to: make a first routing attempt to the producer NF; when the first routing attempt fails: perform an NF discovery to the remote NRF based on the discovery header; perform an alternate routing attempt to an alternate producer NF from the plurality of producer NFs based on the NF discovery; return a success response to the first PLMN, the success response including a location identifier of the alternate producer NF; and store, at the consumer NF, the location identifier.

Clause 10. The PLMN system of clause 9, wherein the instructions, upon execution by the one or more processors, further cause the one or more processors to perform a subsequent service request routing operation, including: receive a subsequent NF routing request from the consumer NF at the local SCP, the subsequent NF routing request including a routing binding header identifying the alternate producer NF as the target NF of the subsequent NF routing request based on the location identifier; forward the subsequent NF routing request from the local SCP to the remote SCP, directing the remote SCP to: make a first subsequent routing attempt to the alternate producer NF; when the first subsequent routing attempt fails: perform a second NF discovery to the remote NRF based on the routing binding header; perform a subsequent alternate routing attempt to the producer NF based on the NF discovery; and return a subsequent success response to the first PLMN, the subsequent success response identifying the producer NF as servicing the subsequent NF routing request.

Clause 11. A method comprising: operating a first public land mobile network (PLMN) to perform delegated discovery and routing to a second PLMN, comprising: sending, via the first PLMN, a request for capability details of the second PLMN, the capability details including an ability of the second PLMN to handle delegated service discovery and selection; receiving, at the first PLMN, the capability details; sending, from the first PLMN to the second PLMN based on the capability details, a delegated discovery and network function (NF) selection request directing a remote service communications proxy (SCP) of the second PLMN to determine a producer NF of the second PLMN to process a service request from a consumer NF of the first PLMN; and receiving a service request response at the first PLMN from the second PLMN in response to the delegated discovery and NF selection request.

Clause 12. The method of clause 11, further comprising: the first PLMN has a model D deployment, the model D deployment indicating a mobile network including an SCP configured to perform delegated discovery and routing; and the second PLMN has a model D deployment.

Clause 13. The method of clause 11 or 12, further comprising: sending the request for capability details via a local network repository function (NRF) of the first PLMN to a remote NRF of the second PLMN; and receiving the capability details at the local NRF from the remote NRF.

Clause 14. The method of clause 13, further comprising: sending the request for capability details via a GET request for a custom parameter; and sending a subscription request, from the local NRF to the remote NRF, to receive an update when the capability details of the second PLMN change.

Clause 15. The method of clause 13 or 14, further comprising: providing the capability details from the local NRF to a local SCP of the first PLMN in response to a remote PLMN capability request from the local SCP.

Clause 16. The method of clause 13, 14 or 15, further comprising: receiving the service request at a local SCP of the first PLMN from the consumer NF; and sending the delegated discovery and NF selection request from the local SCP to the remote SCP in response to the service request.

Clause 17. The method of any of clauses 13 to 16, further comprising: sending a first NF discovery request from the local NRF to the remote NRF to determine the remote SCP; and sending the delegated discovery and NF selection request to the remote SCP based on a response to the first NF discovery request received from the remote NRF.

Clause 18. The method of clause 17, further comprising: the delegated discovery and NF selection request directs the remote SCP to determine the producer NF of the second PLMN to process a service request, including: issuing a second NF discovery request to the remote NRF to determine a plurality of producer NFs of the second PLMN configured to process the service request; performing a selection of the producer NF from the plurality of producer NFs; performing a first routing attempt of the service request to the producer NF; when the first routing attempt fails, performing an alternate routing attempt to an alternate producer NF from the plurality of producer NFs; receiving the service request response from a successful one of the first routing attempt and the alternate routing attempt; and forwarding the service request response to a local SCP of the first PLMN.

Clause 19. The method of any of clauses 13 to 18, further comprising: the first PLMN has a model C deployment indicating a mobile network not configured to perform delegated discovery and routing; the second PLMN has a model D deployment indicating a mobile network including an SCP configured to perform delegated discovery and routing; performing an initial service request routing operation, including: receiving a first NF discovery request from the consumer NF at the local NRF for information on the producer NF to process the service request; performing NF discovery between the local NRF to the remote NRF for a plurality of producer NFs configured to process the service request; providing a discovery response to the consumer NF including details on the plurality of producer NFs; receiving an NF routing request from the consumer NF at a local SCP of the first PLMN, the NF routing request including a discovery header identifying the producer NF as a target NF of the NF routing request; forwarding the NF routing request from the local SCP to the remote SCP, directing the remote SCP to: making a first routing attempt to the producer NF; when the first routing attempt fails: performing an NF discovery to the remote NRF based on the discovery header; performing an alternate routing attempt to an alternate producer NF from the plurality of producer NFs based on the NF discovery; returning a success response to the first PLMN, the success response including a location identifier of the alternate producer NF; and storing, at the consumer NF, the location identifier.

Clause 20. The method of clause 19, further comprising: performing a subsequent service request routing operation, including: receiving a subsequent NF routing request from the consumer NF at the local SCP, the subsequent NF routing request including a routing binding header identifying the alternate producer NF as the target NF of the subsequent service request based on the location identifier; forwarding the subsequent NF routing request from the local SCP to the remote SCP, directing the remote SCP to: making a first subsequent routing attempt to the alternate producer NF; when the first subsequent routing attempt fails: performing a second NF discovery to the remote NRF based on the routing binding header; performing a subsequent alternate routing attempt to the producer NF based on the NF discovery; and returning a subsequent success response to the first PLMN, the subsequent success response identifying the producer NF as servicing the subsequent NF routing request.

Clause 21. A public land mobile network (PLMN) system, comprising: one or more processors; and a memory having stored thereon instructions that, upon execution by the one or more processors, cause the one or more processors to: send, via a local network repository function (NRF) of a first PLMN, a request for capability details of a second PLMN, the capability details including an ability of the second PLMN to handle delegated service discovery and selection; receive, at the local NRF, the capability details; send, from the first PLMN to the second PLMN based on the capability details, a delegated discovery and network function (NF) selection request directing a service communications proxy (SCP) of the second PLMN to determine a producer NF of the second NF to process a service request from a consumer NF of the first PLMN; and receive a service request response at the first PLMN from the second PLMN.

As will be appreciated by one skilled in the art, aspects of the presently taught approaches may be embodied as a system, method, computer program product, and other configurable systems. Accordingly, aspects of the presently taught approaches may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the presently taught approaches may take the form of a computer program product embodied in one or more memory devices or computer readable medium(s) having computer readable program code embodied thereon.

Unless the context clearly requires otherwise, throughout the description and the claims, the words "comprise," "comprising," "including," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. Except when used for the selection or determination between alternatives, the word "or" in reference to a list of two or more items covers all the following interpretations of the word: any of the items in the list, all the items in the list, and any combination of the items in the list.

The phrases "in some embodiments," "according to some embodiments," "in the embodiments shown," "in other embodiments," and the like generally mean the particular feature, structure, or characteristic following the phrase is included in at least one implementation of the present technology, and may be included in more than one implementation. In addition, such phrases do not necessarily refer to the same embodiments or different embodiments.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or sub combinations. Each of these processes or blocks may be implemented in a variety of different ways. Also, while processes or blocks are at times shown as being performed in series, these processes or blocks may instead be performed or implemented in parallel, or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for" but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

## Claims

1. A public land mobile network (PLMN) system, comprising:
one or more processors; and
a memory having stored thereon instructions that, upon execution by the one or more processors, cause the one or more processors to delegate discovery and routing from a first PLMN to a second PLMN, including:
send, via a first PLMN, a request for capability details of a second PLMN, the capability details including an ability of the second PLMN to handle delegated service discovery and selection;
receive, at the first PLMN, the capability details;
send, from the first PLMN to the second PLMN based on the capability details, a delegated discovery and network function (NF) selection request directing a remote service communications proxy (SCP) of the second PLMN to determine a producer NF of the second PLMN to process a service request from a consumer NF of the first PLMN; and
receive a service request response at the first PLMN from the second PLMN in response to the delegated discovery and NF selection request.

2. The PLMN system of claim 1, wherein:
the first PLMN has a model D deployment, the model D deployment indicating a mobile network including an SCP configured to perform delegated discovery and routing; and
the second PLMN has a model D deployment

3. The PLMN system of claim 1 or 2, wherein the instructions, upon execution by the one or more processors, further cause the one or more processors to:
send the request for capability details via a local network repository function (NRF) of the first PLMN to a remote NRF of the second PLMN; and
receive the capability details at the local NRF from the remote NRF.

4. The PLMN system of claim 3, wherein the instructions, upon execution by the one or more processors, further cause the one or more processors to:
send the request for capability details via a GET request for a custom parameter; and
send a subscription request, from the local NRF to the remote NRF, to receive an update when the capability details of the second PLMN change.

5. The PLMN system of claim 3 or 4, wherein the instructions, upon execution by the one or more processors, further cause the one or more processors to:
provide the capability details from the local NRF to a local SCP of the first PLMN in response to a remote PLMN capability request from the local SCP.

6. The PLMN system of claim 5, wherein the instructions, upon execution by the one or more processors, further cause the one or more processors to:
receive the service request at the local SCP from the consumer NF; and
send the delegated discovery and NF selection request from the local SCP to the remote SCP in response to the service request.

7. The PLMN system of any of claims 3 to 6, wherein the instructions, upon execution by the one or more processors, further cause the one or more processors to:
send a first NF discovery request from the local NRF to the remote NRF to determine the remote SCP; and
send the delegated discovery and NF selection request to the remote SCP based on a response to the first NF discovery request received from the remote NRF.

8. The PLMN system of claim 7, further comprising: the delegated discovery and NF selection request directs the remote SCP to determine the producer NF of the second PLMN to process a service request, including:
issue a second NF discovery request to the remote NRF to determine a plurality of producer NFs of the second PLMN configured to process the service request;
perform a selection of the producer NF from the plurality of producer NFs;
perform a first routing attempt of the service request to the producer NF;
when the first routing attempt fails, perform an alternate routing attempt to an alternate producer NF from the plurality of producer NFs;
receive the service request response from a successful one of the first routing attempt and the alternate routing attempt; and
forward the service request response to the local SCP.

9. The PLMN system of any of claims 3 to 8, further comprising:
the first PLMN has a model C deployment indicating a mobile network not configured to perform delegated discovery and routing;
the second PLMN has a model D deployment indicating a mobile network including an SCP configured to perform delegated discovery and routing;
wherein the instructions, upon execution by the one or more processors, further cause the one or more processors to perform an initial service request routing operation, including:
receive a first NF discovery request from the consumer NF at the local NRF for information on the producer NF to process the service request;
perform NF discovery between the local NRF to the remote NRF for a plurality of producer NFs configured to process the service request;
provide a discovery response to the consumer NF including details on the plurality of producer NFs;
receive an NF routing request from the consumer NF at the local SCP, the NF routing request including a discovery header identifying the producer NF as a target NF of the NF routing request;
forward the NF routing request from the local SCP to the remote SCP, directing the remote SCP to:
make a first routing attempt to the producer NF;
when the first routing attempt fails:
perform an NF discovery to the remote NRF based on the discovery header;
perform an alternate routing attempt to an alternate producer NF from the plurality of producer NFs based on the NF discovery;
return a success response to the first PLMN, the success response including a location identifier of the alternate producer NF; and
store, at the consumer NF, the location identifier.

10. The PLMN system of claim 9, wherein the instructions, upon execution by the one or more processors, further cause the one or more processors to perform a subsequent service request routing operation, including:
receive a subsequent NF routing request from the consumer NF at the local SCP, the subsequent NF routing request including a routing binding header identifying the alternate producer NF as the target NF of the subsequent NF routing request based on the location identifier;
forward the subsequent NF routing request from the local SCP to the remote SCP, directing the remote SCP to:
make a first subsequent routing attempt to the alternate producer NF;
when the first subsequent routing attempt fails:
perform a second NF discovery to the remote NRF based on the routing binding header;
perform a subsequent alternate routing attempt to the producer NF based on the NF discovery; and
return a subsequent success response to the first PLMN, the subsequent success response identifying the producer NF as servicing the subsequent NF routing request.

11. A method comprising:
operating a first public land mobile network (PLMN) to perform delegated discovery and routing to a second PLMN, comprising:
sending, via the first PLMN, a request for capability details of the second PLMN, the capability details including an ability of the second PLMN to handle delegated service discovery and selection;
receiving, at the first PLMN, the capability details;
sending, from the first PLMN to the second PLMN based on the capability details, a delegated discovery and network function (NF) selection request directing a remote service communications proxy (SCP) of the second PLMN to determine a producer NF of the second PLMN to process a service request from a consumer NF of the first PLMN; and
receiving a service request response at the first PLMN from the second PLMN in response to the delegated discovery and NF selection request.

12. The method of claim 11, further comprising steps corresponding to the functionality defined in any of claims 2 to 10.

13. A computer readable medium comprising instructions which, when executed by one or more processors of a computer system, cause the computer system to become configured as the PLMN of any of claims 1 to 10.
